# EUROPEAN PATENT SPECIFICATION

(11) **EP 1 562 043 B1**
(45) Date of publication and mention of the grant of the patent: **14.03.2012**
(21) Application number: 05397004.2
(22) Date of filing: 26.01.2005
(51) Int. Cl.: G01N 29/26, G01N 29/04, G01B 17/02

(54) **A method and apparatus for determining the lateral position of a web or fabric edge**
Verfahren und Vorrichtung zur Feststellung der lateralen Lage einer Kante eines Gewebes oder einer Warenbahn
Procédé et disposiif pour la détermination de la position latérale du bord d'une bande ou d'un tissu

(30) Priority: 05.02.2004 FI 20045028
(43) Date of publication of application: 10.08.2005
(73) Proprietor: Metso Paper, Inc., 00130 Helsinki (FI)
(72) Inventor: Makkonen, Sami, FI-40500 Jyväskylä (FI)
(74) Representative: Helke, Kimmo Kalervo

(56) References cited:
- EP-A- 0 740 154
- DE-A1- 19 852 719
- US-A- 5 488 867
- US-A1- 2002 014 120

## Description

The invention relates to a method for determining the lateral position of a web or fabric edge in a web forming machine, the method utilizing ultrasound. The invention also relates to a corresponding apparatus.

US patent No. 5834877 describes an ultrasonic sensor for determining the web edge position, the sensor comprising a C-shape housing. The upper branch of the sensor housing accommodates an ultrasonic transmitter and the lower branch an ultrasonic receiver. The ultrasonic sensor is placed near the web such that the web travels through the gap between the branches. Depending on the position of the web edge, the power received by the ultrasonic receiver varies, based on which the ultrasonic sensor controller determines the edge position relative to the sensor housing. The proposed ultrasonic sensor must be positioned very near to the web, which makes it vulnerable to damage. In addition, the web must remain accurately in place in the vertical direction, which reduces the positioning options of the sensor housing. Due to its construction and position, the sensor housing also soils easily, and its cleaning is difficult. Furthermore, the proposed ultrasonic sensor cannot be located in humid or hot conditions, which are common in a web producing machine manufacturing web.

Due to demanding conditions, optical sensors, which are based on a photoelectric trip device, are today used in web forming machines. In practice, the reflection of light directed to the fabric is detected by adjacent receivers, based on which the position of the edge can be determined. This position information is then used for example for guiding and holding the fabric in a desired position in the cross direction of a paper machine. The accuracy of optical sensors, however, is often insufficient. In addition, web moisture or fabric impurities affect the performance of optical sensors, which complicates the control of the apparatus and causes errors. In order to achieve sufficient accuracy, it is necessary to use several sensors, which require separate signal processing equipment for determining the position information with sufficient accuracy. This increases the purchase and operating costs of the apparatus. At the same time, using optical sensors at the so-called wet end of a web forming machine is impossible. Optical sensors must also be positioned near the web or fabric, which leads to their soiling and even to damaging.

DE patent No. 3913601 sets forth determination of the position of a sieve belt edge using ultrasonic measurement. A sieve belt is narrow and its thickness is several tens of millimeters. In addition, the speed of a sieve belt is notably lower than that of a web or fabric of a web forming machine. Here, too, the measuring head included in the apparatus must be located disadvantageously close to the sieve belt. In addition, the positioning of the sieve belt is very restricted and its application in hot and humid conditions is impossible.

US patent No. 5488867 describes a system for locating the edges of a moving strip of material having two edges and a corresponding method according to the preambles of independent claims 1 and 4. In one embodiment, a pair of ultrasonic transducers are positioned above the path of the moving strip and oriented at acute angles relative to the surface of the strip. A circuit for causing each of the transducers to emit ultrasonic pulses in the direction of the two edges, respectively, a detector circuit connected to the ultrasonic transducers detects acoustic diffractions caused by the edges, respectively, and compares the times of detection of the acoustic diffractions to locate the positions of the edges relative to the pair of tranducers. A microprocessor controls operation of the transducer and receiving signals therefrom and computes one or more of the following quantities: 1) the distance D1 from the transducer to the near one of said two edges, 2) the distance D2 from the transducer to the other of the two edges, 3) the distance to the center of the strip from the transducer D_{c}=½(D₁+D₂), and 4) the width of the strip W=D₂-D₁.

The object of the invention is to provide a new method for determining the lateral position of a web or fabric edge in a web forming machine, the method being simpler, yet more versatile than heretofore, and avoiding the disadvantages of the prior art technique. Another object of the invention is to provide a new apparatus for determining the lateral position of a web or fabric edge in a web forming machine, which apparatus can be positioned in a web forming machine more easily and freely than heretofore and has a simpler and more protected design than heretofore. The features characterizing this method in accordance with the invention become evident from the appended claim 1. Likewise, the features characterizing the apparatus according to the invention become evident from the appended claim 4. The method according to the invention uses ultrasound in a new and surprising way. By using a certain type of ultrasonic sensor and by setting it in a new way, the position of the web or fabric edge can be easily and accurately determined. At the same time, the design of the apparatus remains simple and the ultrasonic sensor can be located in a protected position. By utilizing suitable auxiliary means it is also possible to prevent the ultrasonic sensor from soiling and damaging. Simultaneously, uninterrupted operation of the apparatus can be ensured even in very demanding conditions. The invention is described below in more detail by making reference to the enclosed drawings illustrating some of the embodiments of the invention, in which
- Figure 1: is a lateral view of a fabric guide arranged in a dryer section of a web forming machine,
- Figure 2a: is a partial enlargement of Figure 1,
- Figure 2b: shows the fabric guide of Figure 2a seen in the machine direction,
- Figure 3a: is a lateral view of an ultrasonic sensor according to the invention,
- Figure 3b: shows a detail of the ultrasonic sensor of Figure 3a,
- Figure 4a: is a principal drawing depicting the locating method relative to the fabric of the ultrasonic sensor according to the invention,
- Figure 4b: is a principal drawing depicting another locating method relative to the fabric of the ultrasonic sensor according to the invention,
- Figure 4c: shows an apparatus according to the invention arranged in connection with a fabric.

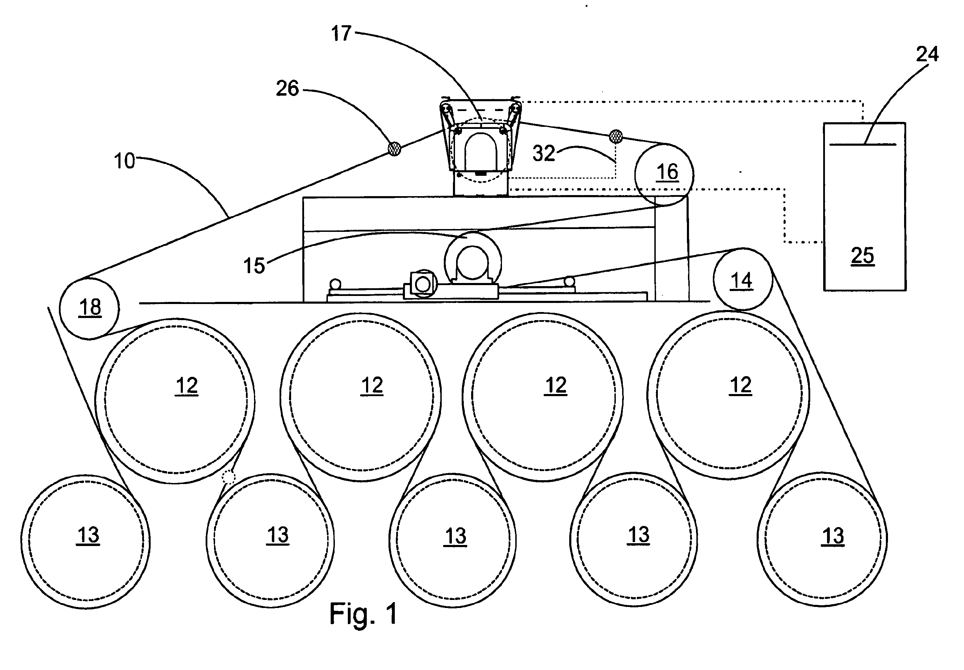

Figure 1 depicts a fabric guide known in the art arranged in connection with a roll 17 supporting the fabric 10 of a web forming machine. The term 'web forming machine' is used here to refer mainly to a paper or board machine. In the embodiment of Figure 1 the fabric guide is arranged to guide a dryer fabric serving as the fabric 10, which travels as an endless loop via drying cylinders 12, vacuum cylinders 13 and lead rolls 14 - 18. In addition to a dryer fabric, the apparatus can be used to guide a press felt, for example, or some other fabric used in a paper machine. The fabric guide known in the art has two sensor elements for determining the fabric edge position in the cross direction of the web forming machine. Each sensor element has a plurality of optical sensors. In order to use the edge position information for fabric guiding, it is additionally required to have a measuring card 24 located in a protected equipment cabinet 25. Based on the information collected from the optical sensors it is then possible to determine the position of the fabric edge and thus control the fabric guide. The data transfer channels between the sensor elements, measuring card and fabric guide are represented with dot-and-dash lines in Figure 1.

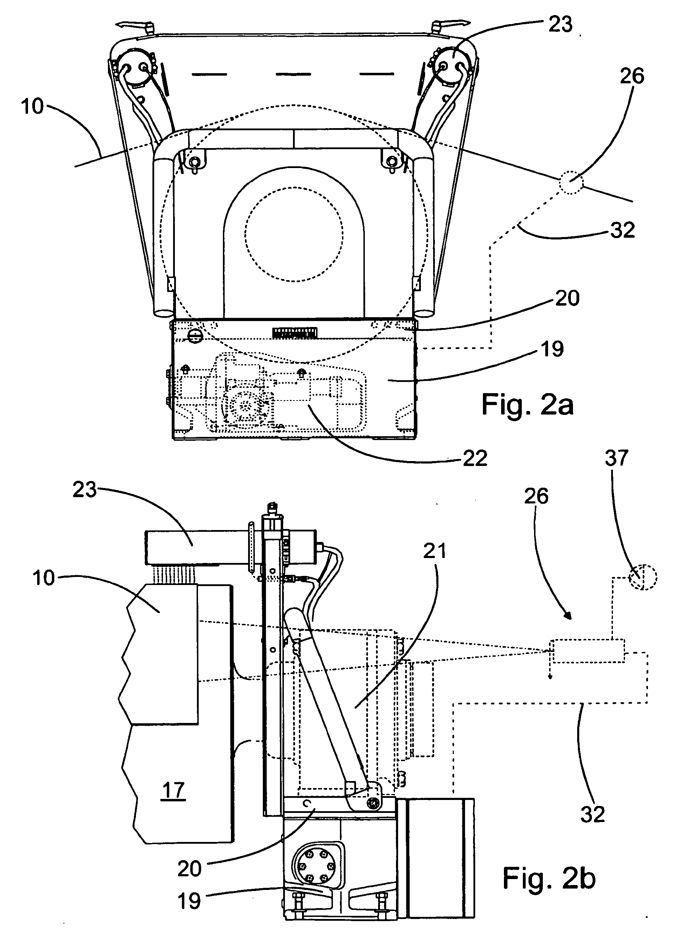

Figures 2a and 2b show a more detailed illustration of the fabric guide known in the art, comprising a base 19 adapted to be fastened to the web forming machine frame, and a transfer base 20 movably adapted to the base 19. Fabric guiding is provided by changing the position of the roll 17. In practice, the bearing pedestal 21 of the roll 17 is fastened to the transfer base 20, which thus moves in the machine direction. The bearing assembly of the roll allows this movement, which can be as long as 100 mm. In practice, however, a movement of a few millimeters is sufficient for providing the desired guiding effect. Installed inside the base 19 there is a suitable motor 22, and the power is usually transmitted to the transfer base 20 by means of a gear system. In addition, the transfer base 20 is movably fastened to the base 19 by means of linear guides (not shown).

A fabric rotating at a high speed is continuously moving also in the lateral direction. Therefore, also its guiding must be continuous. That is, the roll end must be moved all the time for keeping the fabric at a desired position. For this reason, the fabric guide known in the prior art technique comprises the above mentioned sensor elements 23, which are used for determining the position of the fabric 10 in the axial direction of the roll 17. In practice, an electronic system connected to the fabric guide continuously compares the measuring results of the optical sensors with the set values and, if necessary, moves the transfer base over the required distance by controlling the motor.

In place of optical means, the method according to the invention uses ultrasound. Generally, according to the invention, the edge position is surprisingly determined by means of a distance measurement. In addition, the distance is measured at the sides of the web or fabric. This allows positioning the measuring equipment far from the web or fabric, reducing in this way their soiling. Furthermore, there is more freedom in the positioning of the equipment, and the equipment is smaller and simpler in design than heretofore. To be precise, the distance is measured with ultrasound in the lateral direction outside the web or fabric. Figure 2b shows an apparatus according to the invention arranged in connection with a known fabric guide, the apparatus comprising an ultrasonic sensor 26. According to the invention, the ultrasonic sensor can be positioned substantially far from the fabric. In addition, it can be located more freely than heretofore in various positions of the fabric. Two preferable locating positions of the ultrasonic sensor 26 are shown in Figure 1 with a dimmed circle. On the other hand, the ultrasonic sensor can be located in a different position, such as the pocket between the drying cylinders 12 and vacuum cylinder 13 (circle drawn with dash line). However, a preferable installation position for the sensor is near the roll that guides the fabric, in which case it is possible to achieve a control feedback with almost no delay. The guide roll can additionally have integrated fabric stretching or seam turning or even all these three functions.

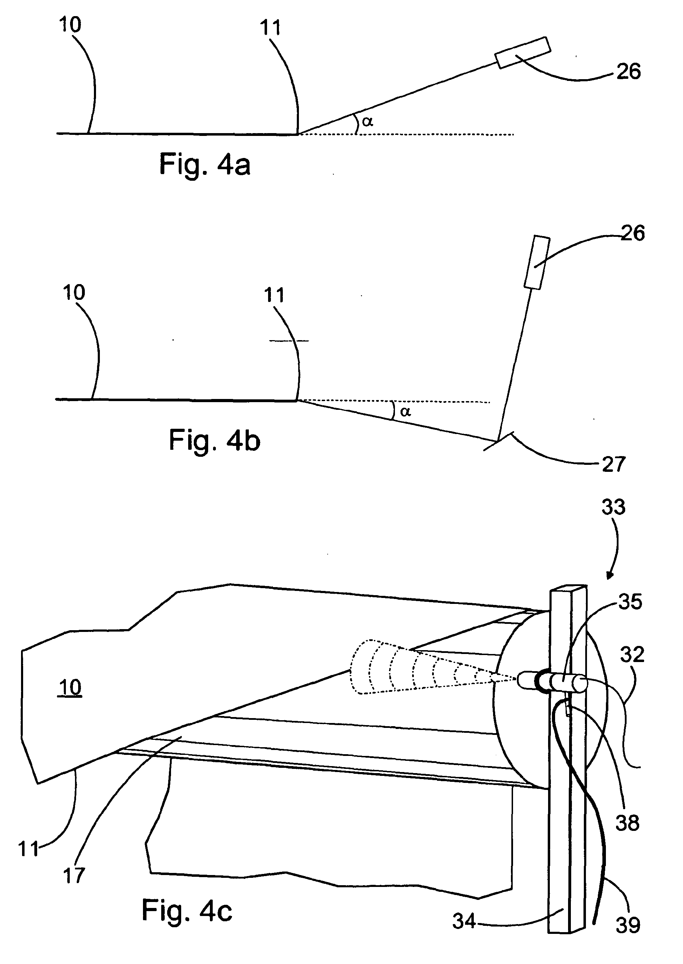

Figures 4a and 4b show a principal drawing of the ultrasonic sensor 26 located in connection with the fabric 10. Generally the distance measurement is so arranged that between the ultrasonic propagation direction and the plane formed by the web or fabric there is formed an angle α that is smaller than the right angle. In other words, the ultrasonic sensor 26 is arranged above or below the plane formed by the web or fabric 10. The distance is thus measured only at one point. Generally the angle α is adapted to size 0° - 50°, more preferably 0° - 10°. The effect of reflection of the web or fabric is reduced by diminishing the angle. Then a measurement made as much as possible from the side is the most accurate in practice. At the same time, the positioning of the ultrasonic sensor in the web forming machine is easy. In Figure 4a the ultrasonic sensor is directed towards the edge 11 of the fabric 10, but the ultrasonic propagation direction can also be changed in the distance measurement by reflecting at least once. This is shown in Figure 4b, in which there is arranged a suitable reflector 27 between the ultrasonic sensor 26 and the edge 11 of the fabric 10. Here the reflection axis of the reflector is horizontal, but by using a vertical reflection axis the ultrasonic sensor can be positioned for example behind the frame beam of the web forming machine for protection (not shown). If required, the ultrasonic propagation direction can be changed by reflecting even twice.

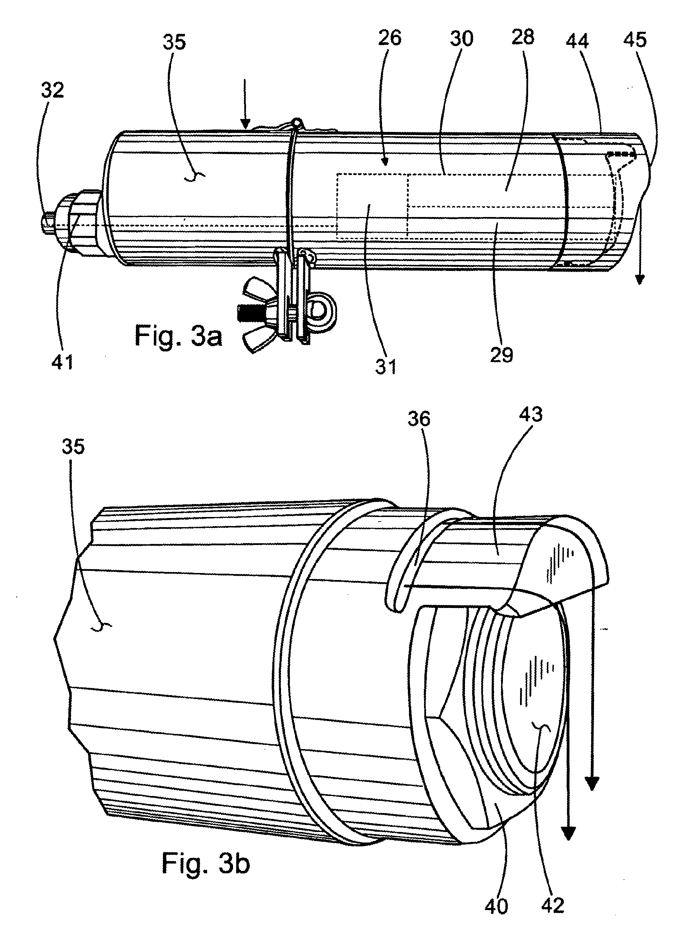

According to the invention, the ultrasonic sensor is thus located to the side of the web or fabric. In addition, the ultrasonic sensor is adapted to measure the distance between the ultrasonic sensor and the edge for determining the position of the edge. With this solution, determining the edge position is more accurate and easier than heretofore. Also, there is more freedom than before in positioning the ultrasonic sensor. In addition to the fabric edge, the apparatus can as well be used for determining the edge of a web or a paper web. In total, the design of the apparatus remains simple, when using the ultrasonic sensor 26, which comprises an ultrasonic transmitter 28 and an ultrasonic receiver 29 adapted in one sensor housing 30 (Figure 3a). In addition to these, the sensor housing accommodates measuring electronics 31 for processing the information produced by the ultrasonic transmitter 28 and the ultrasonic receiver 29. In addition, the measuring electronics directly provides an analogic voltage or current message, which can be used as such for controlling a fabric guide, for example. The principle of an ultrasonic sensor 26 according to the invention is shown in Figure 3a with dash lines. The connection cable 32 leading directly from the ultrasonic sensor 26 to the fabric guide is shown with dash lines in Figures 1, 2a and 2b.

When using ultrasound it is important that the sensor is kept in place. Therefore the apparatus comprises support elements 33 for locating the ultrasonic sensor preferably at a suitably defined safety distance from the edge 11. The distance can be for example 100 mm, although the ultrasonic sensor itself does not require limiting of the closest measuring distance. In practice, a suitable locating distance is approximately 400 - 1500 mm, more preferably 501 - 750 mm, in which case the ultrasonic sensor can be fastened to the frame constructions of the web forming machine or even outside them. According to the invention, the support elements 33 comprise a support arm 34 and a protective cover 35 adapted thereto for the sensor housing. In practice, the support arm is fastened to the above mentioned frame constructions, for example. The protective cover is essential in particular as regards the performance of the ultrasonic sensor. According to the invention, there is a channel system arranged in the protective cover for cooling the sensor housing and/or keeping the ultrasonic sensor clean by means of an air flow. In other words, air is conducted into the protective cover, which, besides providing cooling, keeps the ultrasonic sensor clean. Figure 2b shows the principle of the compressed air source 37. In favorable conditions cooling may be unnecessary, in which case normal compressed air, for example, is used. On the other hand, in hot conditions, a vortex pipe may be connected to the protective cover for providing a cooling air flow inside the protective cover. This is shown in Figure 4c, in which the vortex pipe 38 with compressed air connections 39 is fastened to the protective cover 35. Tests have shown that the effect of fabric moving and swinging on the measurement, for example, is inexistent, and hence the ultrasonic sensor can as well be located on the unsupported part of the fabric. The situation is like this particularly when the ultrasonic sensor is located in an angle, which is as small as possible in relation to the fabric.

In the exemplifying embodiment the protective cover is a casing made of stainless steel pipe that can be opened at the center. The ultrasonic sensor itself is screwed to the threading arranged at the end wall of the casing. Here the thread is in the nut 40 fastened to the end of the protective cover 35. At the other end of the protective cover 35 there is a lead-through 41 for the connecting cable 32. The ultrasonic sensor is thus fastened to the protective cover only at its end part, allowing the cooling air to efficiently surround particularly the electronic components (Figure 3a). The ultrasonic sensor also comprises a detector head 42, which is the only part in connection with the surrounding air. The detector head also has a specific layer, which transmits ultrasonic waves between the detector head and the external air preventing at the same time conduction of heat into the protective cover. According to the invention, the channel system opens to the vicinity of the detector head for forming an air knife. In practice, the air knife prevents accumulation of dirt in the detector head. The proposed protective cover 35 has an air guide 43 extending further than the detector head 42, with air flowing thereabove from inside the protective cover 35 through an opening 36. The air guide 36 is shown in Figure 3b. The protective cover 35 is completed with an end component 44 having a detent 45 designed according to the air guide 36. In the finished protective casing the end component is on top of the protective cover allowing air to flow from the opening between the air guide and the end component to the detent, which turns the direction of the air flow (Figure 3a). This provides efficient cleaning without disturbing, however, the operation of the ultrasonic sensor. Generally the air knife is arranged essentially in the cross direction relative to the ultrasonic propagation direction, preventing thus temperature variations within the measuring range. Air flows are represented with arrows in Figures 3a and 3b.

In the ultrasonic sensors used in the apparatus according to the invention, piezoceramic components function as a transmitter and receiver. In addition, the detection head has an acoustically thin medium layer through which ultrasound is transmitted to the surrounding air and vice versa. This provides good accuracy for the ultrasonic sensor allowing it to be used even in demanding conditions. Furthermore, also the sensor housing itself is watertight. In addition, when using a protective cover, compressed air generates an overpressure, which prevents access of moisture to the sensor housing. In practice, the ultrasonic sensor transmits a package of sound pulses and converts the received echo pulses directly into voltage or current messages by means of its measuring electronics. The measuring electronics integrated in the ultrasonic sensor determines the distance based mainly on the echo time and speed of sound. In practice the frequency of ultrasound is approximately 65 - 400 kHz depending on the sensor type. Correspondingly, the iterative frequency of the sound pulse is approximately 14 - 140 Hz. The ultrasonic sensor forms a sound cone with a cone angle of 10° in the tested apparatus. The sound cone opens outwardly from the ultrasonic sensor and generally the object is detected, if it is in the range of the sound cone or moves across the sound cone. The principle of the sound cone is shown in Figures 2b and 4c with dot-and-dash lines. The measuring accuracy of the ultrasonic sensor can be improved, and malfunctions can be minimized by setting with the measuring electronics a certain measuring range, whose echo pulses only are detected by the ultrasonic sensor. In any case, the measuring range of the apparatus according to the invention is multi-tenfold compared to conventional apparatuses. In addition to analogic current or voltage messages the ultrasonic sensor can be set as a relay or connected to a computer or other logic system, for example, by means of serial connection. Serial connection also enables changing the settings of the ultrasonic sensor and using versatile measuring functions. The ultrasonic sensor has preferably also a temperature sensor based on which the measuring electronics compensates the effect of the temperature on the operation of the apparatus. In this case, irrespective of changes in conditions, the accuracy and reliability of the apparatus remain unchanged. Suitable for use in the apparatus are particularly the ultrasonic precision sensors.

The method and apparatus according to the invention are particularly suitable for large and high-speed web forming machines, in which the width of the web or fabric exceeds 5 meters, most commonly 8 - 11 meters, in the future as much as 15 meters. In practice, as the width increases, the fabrics' price per width meter also increases. That is, wide fabrics are proportionally more expensive than narrow fabrics. Thus, devices touching the fabric edge for determining the fabric position should be avoided. Although the price of such devices is affordable, their use reduces the fabric life. Particularly for the dryer fabrics, the life of which is several months, even several tens of months, a touching edge sensor can rub the fabric edge such that it becomes weaker than the rest of the fabric. This increases the risk of fabric damage and can lead to a premature fabric change for example when occurring together with load caused by fabric tensioning or a production disturbance. The advantages of an untouching fabric sensor become even more emphasized with an increasing fabric speed. The apparatus according to the invention performs well at a speed exceeding 1000 m/min and it is particularly suitable at a speed exceeding 1300 m/min. The forces generated by the lateral movement of the fabric increase at high speeds and the number of cycles per time unit also increases. In this situation touching devices would be even more disadvantageous.

In the apparatus according to the invention, there is more freedom than heretofore for the positioning of the ultrasonic sensor. In practice, a preferable position for an ultrasonic sensor measuring the fabric from the side is between the frame constructions. In this case the ultrasonic sensor is protected, besides by its protective cover, for example against an impact by an off-tracked damaged fabric. At the same time, less material is accumulated compared to sensor applications that are positioned near the fabric. This reduces the cleaning frequency of the ultrasonic sensor. On the other hand, the ultrasonic sensor is insensitive to minor soiling, which can also be avoided by using an air knife according to the invention.

Deviating from the prior art, the apparatus according to the invention functions also with thin webs and fabrics having a thickness of as small as below 5 mm. In a web forming machine, dryer fabrics are used, among others, having a thickness of approximately 1 - 2 mm. Correspondingly, wet fabrics are approximately 0.4 - 2 mm thick. The apparatus can additionally be used also for press felts and belts, the thickness of which is usually approximately 2 - 4 mm. In the dryer section, the previously mentioned protective cover is preferably used, which at the same time serves as thermal insulation also cooling the ultrasonic sensor. Correspondingly in the forming and press sections, only a moisture-insulating protective cover can be used or the ultrasonic sensor can be located even without a protective cover.

The method according to the invention can be used in various web forming machines for monitoring the edge of various webs and fabrics. In addition to fabrics, the method can also be used for example for monitoring and measuring the web and its width as well as for break monitoring. A lateral distance measurement provides an accurate position determination in a simple manner. In addition, the apparatus according to the invention can be freely located in various positions in the web forming machine including humid and hot conditions. In practice, the design of the apparatus is simple and the edge position information provided by it can be directly used for controlling other apparatuses, for example.

## Claims

1. A method for determining the lateral position of a web or fabric edge in a web forming machine, the method utilizing ultrasound, by which the position of the edge (11) is determined using distance measurement at the side of the web or fabric (10), and the distance is measured with ultrasound in the lateral direction outside the web or fabric (10), and the distance measurement is arranged such that between the ultrasonic propagation direction and the plane formed by the web or fabric (10) there is formed an angle α that is smaller than the right angle, and a ultrasonic sensor (26) having a sensor housing (30) is used, and the sensor (26) is arranged in a protective cover (35), **characterized in that** in the protective cover (35) is arranged a channel system (36), and the sensor housing (30) is cooled and/or the ultrasonic sensor (26) is kept clean by means of an air flow in the channel system (36).

2. A method according to claim 1, **characterized in that** the angle α is adapted to seize 0° - 50°, more preferably 0° - 10°.

3. A method according to claim 1 or 2, **characterized in that** in the distance measurement the direction of the ultrasonic propagation between the ultrasonic sensor (26) and the edge (11) or vice versa is changed by reflecting at least once.

4. An apparatus for determining the lateral position of a web or fabric edge in a web forming machine, the apparatus comprising an ultrasonic sensor (26), which is located to the side of the web or fabric (10) and the ultrasonic sensor (26) is adapted to measure the distance between the ultrasonic sensor (26) and the edge (11) for determining the position of the edge (11), and the ultrasonic sensor (26) has a sensor housing and it is arranged above or below the plane formed by the web or fabric (10), and the apparatus comprises support elements (33), which comprise a support arm (34) and a protective cover (35) arranged thereto for the sensor housing (30), **characterized in that** arranged in the protective cover (35) there is a channel system (36) for cooling the sensor housing (30) and/or keeping clean the ultrasonic sensor (26) by means of an air flow.

5. An apparatus according to claim 4, **characterized in that** the ultrasonic sensor (26) comprises a detection head (42), to the vicinity of which the channel system (36) is openably arranged for forming an air knife.

6. An apparatus according to claim 5, **characterized in that** the air knife is arranged essentially in the cross direction relative to the ultrasonic propagation direction.

7. An apparatus according to any of claims 4 - 6, **characterized in that** the ultrasonic sensor (26) comprises an ultrasonic transmitter (28) and an ultrasonic receiver (29), which are both arranged in the sensor housing (30).

## Patentansprüche

1. Zur Bestimmung der seitlichen Position des Randes einer Materialbahn oder eines Gewebes in einer Materialbahn-Herstellungsmaschine dienendes Verfahren, das mit Ultraschall arbeitet, und bei dem die Position des Randes (11) durch Entfernungsmessung aus seitlicher Richtung von der Materialbahn oder dem Gewebe (10) bestimmt wird, und die Entfernung von einer Stelle außerhalb der Materialbahn oder des Gewebes (10) in seitlicher Richtung durch Ultraschall gemessen wird, und die Entfernungsmessung so eingerichtet wird, dass von der Schallausbreitungsrichtung und der von der Materialbahn oder dem Gewebe (10) gebildeten Ebene ein Winkel α eingeschlossen wird, der kleiner als 90° ist, und ein Ultraschallsensor (26) mit Sensorgehäuse (30) eingesetzt wird, und der Sensor (26) in einem Schutzmantel (35) angeordnet ist, **dadurch gekennzeichnet, dass** der Schutzmantel (35) ein Kanalsystem (36) aufweist und durch Luftströmung in dem Kanalsystem das Sensorgehäuse (30) gekühlt wird und/oder der Ultraschallsensor (26) sauber gehalten wird.

2. Verfahren nach Anspruch 1, **dadurch gekennzeichnet, dass** der Winkel α auf einen Wert zwischen 0° - 50°, bevorzugter zwischen 0° - 10° eingestellt wird.

3. Verfahren nach Anspruch 1 oder 2, **dadurch gekennzeichnet, dass** bei der Entfernungsmessung die Ausbreitungsrichtung des Ultraschalls zwischen dem Ultraschallsensor (26) und dem Rand (11) oder umgekehrt durch Reflexion wenigstens einmal geändert wird.

4. Zur Bestimmung der seitlichen Position des Randes einer Materialbahn oder eines Gewebes in einer Materialbahn-Herstellungsmaschine dienende Anlage, die einen seitlich von der Materialbahn oder dem Gewebe (10) angeordneten Ultraschallsensor (26) umfasst, der dazu eingerichtet ist, zur Bestimmung der Position des Randes (11) die Entfernung zwischen dem Ultraschallsensor (26) und dem Rand (11) zu messen, und der Ultraschallsensor (26) ein Sensorgehäuse hat und oberhalb oder unterhalb der von der Materialbahn oder dem Gewebe gebildeten Ebene angeordnet ist, und zu der Anlage Stützelemente (33) gehören, die einen Stützarm (34) und einen daran angeordneten Schutzmantel (35) für das Sensorgehäuse (30) umfassen, **dadurch gekennzeichnet, dass** in dem Schutzmantel (35) ein Kanalsystem (36) zum Kühlen des Sensorgehäuses (30) und/oder zum Sauberhalten des Ultraschallsensors (26) durch Luftströmung ausgebildet ist.

5. Anlage nach Anspruch 4, **dadurch gekennzeichnet, dass** zu dem Ultraschallsensor (26) ein Detektorkopf (42) gehört, in dessen Nahbereich das Kanalsystem (36) zur Bildung eines Luftmessers mündet.

6. Anlage nach Anspruch 5, **dadurch gekennzeichnet, dass** das Luftmesser im Wesentlichen quer zur Ausbreitungsrichtung der Schallwellen angeordnet ist.

7. Anlage nach irgendeinem der Ansprüche 4 bis 6, **dadurch gekennzeichnet, dass** der Ultraschallsensor (26) einen Ultraschallsender (28) und einen Ultraschallempfänger (29) umfasst, die beide im gleichen Sensorgehäuse (30) angeordnet sind.

## Revendications

1. Méthode pour déterminer la position latérale du bord de la feuille continue ou de la toile dans une machine de formation de feuille continue, dans laquelle méthode les ultrasons sont utilisés, à l'aide desquels la position du bord (11) est déterminée par mesure de distance sur le côté de la feuille continue ou de la toile (10), et la distance est mesurée par ultrasons dans la direction latérale à l'extérieur de la feuille continue ou de la toile (10) et la mesure de distance est organisée de sorte qu'un angle α inférieur à l'angle droit est formé entre la direction de propagation des ultrasons et le plan formé par la feuille continue ou la toile (10), et l'on utilise un capteur d'ultrasons (26) avec un boîtier de capteur (30), et le capteur (26) est disposé dans une enveloppe de protection (35), **caractérisée en ce qu'**à l'intérieur de l'enveloppe de protection (35) est disposé un système de canaux (36), et le boîtier du capteur (30) est refroidi et/ou le capteur d'ultrasons (26) est maintenu propre à l'aide d'un flux d'air dans le système de canaux (36).

2. Méthode selon la revendication 1, **caractérisée en ce que** la taille de l'angle α est de 0° à 50°, de préférence de 0° à 10°.

3. Méthode selon la revendication 1 ou 2, **caractérisée en ce que** pendant la mesure de distance la direction des ultrasons entre le capteur d'ultrasons (26) et le bord (11) ou vice versa est changée au moins une fois par réflexion.

4. Appareil pour déterminer la position latérale du bord de la feuille continue ou de la toile dans une machine de formation de feuille continue, lequel appareil comprend un capteur d'ultrasons (26), qui est situé sur le côté de la feuille continue ou de la toile (10), et le capteur d'ultrasons (26) est disposé de sorte à mesurer la distance entre le capteur d'ultrasons (26) et le bord (11) pour déterminer la position du bord (11), et le capteur d'ultrasons (26) a un boîtier de capteur et il est disposé au-dessus ou au-dessous du plan formé par la feuille continue ou la toile (10), et l'appareil comprend des éléments de soutien (33), qui comprennent un bras de support (34) auquel est attachée une enveloppe de protection (35) pour le boîtier du capteur (30), **caractérisé en ce que** disposé dans l'enveloppe de protection (35) il y a un système de canaux (36) pour refroidir le boîtier du capteur (30) et/ou pour maintenir propre le capteur d'ultrasons (26) à l'aide d'un flux d'air.

5. Appareil selon la revendication 4, **caractérisé en ce que** le capteur d'ultrasons (26) comprend une tête de détection (42), à proximité de laquelle le système de canaux (36) est disposé de manière ouvrante pour former une lame d'air.

6. Appareil selon la revendication 5, **caractérisé en ce que** la lame d'air est disposée essentiellement dans la direction transversale par rapport à la direction de propagation des ultrasons.

7. Appareil selon l'une quelconque des revendications 4 à 6, **caractérisé en ce que** le capteur d'ultrasons (26) comprend un émetteur d'ultrasons (28) et un récepteur d'ultrasons (29), qui sont tous les deux disposés dans le boîtier du capteur (30) .
